# EUROPEAN PATENT APPLICATION

(11) **EP 2 631 060 A1**
(43) Date of publication of application: **28.08.2013**
(21) Application number: 13156460.1
(22) Date of filing: 22.02.2013
(51) Int. Cl.: B29C 47/40, B29C 47/92, B29C 47/36, B29C 47/00, B29C 47/10, B29C 47/76, B29C 47/28, B29C 47/60, B29C 47/68, B29C 47/82, B29C 47/88

(54) **A low-pressure process for preparing a polymer film by extrusion-blowing**

(30) Priority: 23.02.2012 EP 12305214
(71) Applicant: Plastiques et Tissages De Luneray Societe Par Actions Simplifiee, 76550 Ambrumesnil (FR)
(72) Inventor: Schmidt, Harald, 46446 Emmerich (DE); Breso, Christophe, 76200 Dieppe (FR); Gallet, Jean-François, 92410 Ville d'Avray (FR)
(74) Representative: Regimbeau

(57) **Abstract**

The invention discloses a low-pressure process for preparing a polymer film by extrusion-blowing, in which the raw material consisting of polymer and additive is fed into a multi-screw extruder, said raw material does not need to be compounded first and then the extrudate is directly passed in a circular die to blow the film.

## Description

The present invention relates to a low-pressure process, advantageously to a single step low-pressure process, for manufacturing polymer films.

The manufacture of plastic film for products such as shopping bags is achieved using a blown film line.

The manufacture of polymer film comprises two successive and completely separate steps:
a) a first step of compounding: manufacturing the raw polymer in the form of pellets and manufacturing the non-liquid additives in the form of pellets with suitable polymer carrier; then
b) a second step of blow film extruding said granules; high pressure within the barrel is required.

The starting material is polymer and eventually additives. The polymer is under the form of pellets (small beads having an average diameter of about 3mm). The polymer has previously been subjected to a compounding step from the raw polymer (in the form of pellets or powder).

Additives, in either liquid or pellet form, are often used. The total water content of the polymer and additives must be below 2500 ppm. The non-liquid additives are necessarily under the form of pellets. Consequently, the additives, such as calcium carbonate, are first compounded with a polymer carrier to form the pellets which can be used in a blow film line.

In a blow film line, the pellets are fed in a single screw extruder. The rotating screw forces the polymer forward into the barrel. High pressure is required for uniform melting and proper mixing of the polymer. The pressure inside the barrel is commonly of about 350-450 bar.

Most single screws have the following three zones:
● Feed zone. Also called solids conveying. This zone feeds the polymer and additive granules into the extruder, and the channel depth is usually the same throughout the zone.
● Melting zone. Also called the transition or compression zone. Most of the polymer and additive granules is melted in this section, and the channel depth gets progressively smaller. In this zone the components are however not firmly mixed and in particular not chemically reacted.
● Metering zone. Also called melt conveying. This zone, in which channel depth is again the same throughout the zone, melts the last polymer and additive granules and mixes to a uniform temperature and composition.

Standard single screw with 1/3 feed, 1/3 compression and 1/3 metering sections are often used.

After passing through the barrel, molten plastic enters the die. The die is an upright cylinder with a circular opening. The molten plastic is pulled upwards from the die by a pair of nip rolls high above the die. Around the die sits an air-ring. The air-ring cools the film as it travels upwards. In the centre of the die is an air outlet from which compressed air can be forced into the centre of the extruded circular profile, creating a bubble. This expands the extruded circular cross section by some ratio, called the "blow-up ratio". The nip rolls flatten the bubble into a double layer of film. This film can then be spooled or printed on, cut into shapes, and heat sealed into bags or other items.

Such a process is for example disclosed in WO99/50334.

Instead of a single screw, a double screw may also be used, such as disclosed in EP 1 547 767. The double screw is however not used for compounding. For example, in EP 1 547 767 vent port and degassing are missing which are however needed for compounding.

However, the two-step extrusion is time-, energy- and cost-consuming. It would be advantageous to feed the blown film line directly with raw polymer and raw additives.

Furthermore, high costs can be saved by using raw additives under the form of powder rather than first compounding the raw additives with a suitable polymer carrier (said polymer carrier is expensive).

In addition, under the high pressure conditions the polymer is subjected to high shear stress. However, the high shear stress causes damages to the molecular structure of the polymer while various molecule fragments are split off. The polymer chains are shorthened and the molecular weight is reduced. Furthermore, extruding the polymer twice will also damage the molecular structure of said polymer.

The high pressure inside the barrel is also energy- and cost-consuming.

It has now been discovered that plastic films can be manufactured by a low - pressure blow film extrusion process. "Low-pressure" means that within the extruder the pressure is below 150 bars, more advantageously below 120 bars, even more advantageously between 10 and 60 bar. In addition, the first step of compounding can be omitted both for the polymer and for the additive. Thus the inventors surprisingly discovered that films can be manufactured by blow film extrusion with a multi-screw extruder in which the pressure does not exceed 150 bars from raw materials (polymer and/or additives) which does not need to be compounded first into pellets.

Within the scope of the present invention the term "film" encompasses thin structures having at least substantially flat and smooth surfaces. This term does not encompass foamed sheets. In the manufacture process of foamed sheets, gaseous additives (foaming agent like nitrogen) are added in the extruder to create foam. The extruder is not a reactive or compounding extruder.

The invention has thus for first object a low-pressure process for preparing a polymer film by extrusion-blowing, characterized in that it comprises the following successive steps:
a- feeding a multi-screw extruder, in a first barrel section, with the raw material consisting of polymer and additive, said raw material does not need to be compounded first; then
b- passing the raw material from the first barrel section to the last barrel section to form an extrudate, wherein the pressure measured at the exit of the last barrel section does not exceed 150 bars, then
c- passing the extrudate in a circular die to blow the film.

The multi-screw extruder comprises the four following zones:
- adding and mixing of the raw material
- Reacting the resulting mixture
- Degasing
- Compressing the melt

Thus, in the extrusion-blowing process of the invention, the single screw commonly used is replaced by a multi-screw, advantageously by a twin-screw. One can use any multi-screw, preferably twin-screw, conventionally used in the art for the manufacture of polymer pellets in the compounding field. Using a multi-screw, preferably twin-screw, is energy- and cost-saving since working with a multi-screw, preferably twin-screw, requires less energy than working with a single screw.

The single extrusion with the multi-screw is a compounding or reactive extrusion, meaning that within the multi-screw the polymer and the additives are mixed, compounded and reacted. More particularly, reactive extrusion describes a special process in extrusion technology in which individual components are first bonded by a chemical reaction. The components, polymers and additives, are firmly mixed within the multi-screw. The multi-screw thus contains a process section long enough for compounding.

In comparison, a single screw is not able to firmly mix components. The single screw only melts and pushes the components.

The multi-screw contains a degassing section and advantageously a vent port.

The multi-screw extruder and the circular die are elements of the extrusion-blowing device used in the process of the invention.

The multi-screw extruder can be fed by the desired raw materials, which are under any form: powders, granules, flakes, polymer film pieces to recycle, liquids, ... The additive is preferably a solid or a liquid (but not a gas). The multi-screw extruder can be fed by wet or dried recycled polymers. The water content of the fed raw materials is not critical.

The material does not need to be compounded first. In particular, the additive comprises solid fillers and fibres, wherein at least 50% by weight, advantageously at least 70% by weight, more advantageously from 80 to 100% by weight, of said fillers or fibres, compared to the total weight of said fillers or fibres, are free of carrier material.

US2009/0226711 discloses a method comprising mixing a nano-filler and a polymer composition to form a nanocomposite. The examples are teaching a two step extrusion process making a nanocomposite in a first step and blowing the film in a second step. The description further teaches a continuous process for forming the nanocomposite film. Filler and additive can be added and there is no teaching that said filler and additive can be used without carrier.

We will know describe preferred embodiments of the invention.

The process of the invention is characterized by the fact that the implementation of high pressure above 350 bar at the end of the screw is not necessary. On the contrary, it is preferred to implement a low pressure, below 150 bar. In an advantageous embodiment of the invention, the pressure at the exit of the last barrel section does not exceed 120 bar, more advantageously the pressure is between 10 and 60 bar.

The mix of the material, polymer(s) and additive(s), is done progressively in the multi-screw as the material (and after the melt) is pushed from the entrance to the exit of the multi-screw extruder. In a preferred embodiment of the invention, the "specific output" (defined as the output of the line divided by the revolution per minute of the screw) is from 0.8 to 1.2.

The multi-screw extruder comprises different barrel sections, preferably at least 6 barrel sections. The temperature is selectively adjustable in each barrel section. The multi-screw extruder advantageously comprises a distributive and dispersing mixing zone.

In a first zone, the raw material is added and mixed. The polymer can be a single polymer or a mixture of polymers. The additives can be solid or liquid. The additives can be used as such rather than first compounding the raw additives with a suitable polymer carrier. In particular, the additive comprises solid fillers and fibres, wherein at least 50% by weight, advantageously at least 70% by weight, more advantageously from 80 to 100% by weight, of said fillers or fibres, compared to the total weight of said fillers or fibres, are free of carrier material.

The raw material is fed through one or more feeders. Each feeder can contain from one to many dosing units. The polymer is fed, alone or in combination with additives, in the first barrel section.

This feeding can take place in one or more barrel sections, preferably in one barrel section. However, some additives can be added later on, for example in the second zone (defined below).

In a second zone, the resulting mixture is heated, kneaded and reacted to form a melt. The raw materials are modified and/or disintegrated and/or plasticized. This mixing can take place in one or more barrel sections, preferably in at least two barrel sections, more preferably between three and seven barrel sections.

In a third zone, the resulting melt is degazed which allow water to evaporate from the melt. That's notably why the water content of the raw material does not matter.

In a fourth zone, the melt is compressed. This compressing can take place in one or more barrel sections, preferably in one barrel section.

During the process, the mixture or melt is transported, mixed and compressed in the first to the last barrel section depending on the configuration of the screw elements in each of the barrel section and on rotational speed of screws. The design of the screw elements, the rotational speed of screws and the temperature in each barrel section will be adapted by the man skilled in the art for each mixture on the basis of his technical knowledge.

In a preferred embodiment, one uses a twin-screw having the following design:
- Solid and liquid conveying with right-handed elements in section 1
- Melting with kneading and left-handed elements in section 2
- Melt conveying and introduction of powder in sections 3 and 4
- Distributive and dispersive mixing with kneading block and tooth elements in sections 5, 6 and 7
- Degassing in section 8
- Building up the pressure in sections 9 and 10

Then, the resulting extrudate is passed in a circular die to blow the film (step c-). In a preferred embodiment of the invention, step c- comprises the following successive steps:
c-0. optionnaly, passing the extrudate, exiting the last barrel section of the multi-screw extruder, through a filtering device,
c-1. passing the extrudate, exiting the last barrel section of the multi-screw extruder or exiting the filtering device, in a pressure device, then
c-2- passing the extrudate, exiting the pressure device, in a circular die to blow the film.

A filtering device, such as a screen pack, can be used to remove any residue which would affect the result and mechanical properties of the finished film or which would be deleterious for the pressure device.

In a preferred embodiment of the invention, the extrudate, exiting the last barrier section of the multi-screw extruder or exiting the filtering device, is passed in a pressure device. Such a pressure device will allow a control of the pressure, in particular will allow that the pressure in the entry of the circular die is always the same (more or less 1 %) assuring a constant flow of mass.

Such a pressure device can also be used to increase the pressure. In an embodiment of the invention, the pressure, at the exit of the pressure device, is above 150 bars, advantageously between 150 and 400 bars. The pressure is to be adapted in function of the type of circular die which is after used; more particularly in function of the loss of head of the die.

Any device which allows a control of the pressure, and eventually an increase of the pressure can be used. One can cite, as examples, a pump or an extruder, advantageously a pump, more advantageously a gear pump.

In the extrusion process of the invention, the pressure is preferably controlled and measured at three points: P1: at the exit of the last barrel section (before entering the filtering device), P2: at the exit of the filtering device (before entering the pressure device) and P3 : at the exit of the pressure device (before entering the circular die).

The extrudate exiting the extruder or the pressure device is conducted to a circular die. In a preferred embodiment, the extrudate is pulled upwards from the die by a pair of nip rolls high above the die. Around the die sits an air-ring. The air-ring cools the film as it travels upwards. In the centre of the die is an air outlet from which compressed air is forced into the centre of the extruded circular profile, creating a bubble. This expands the extruded circular cross section by some ratio, called the "blow-up ratio". The nip rolls flatten the bubble into a double layer of film. This film can then be spooled or printed on, cut into shapes, and heat sealed into bags or other items.

In one advantageous embodiment of the invention, the process is a continuous single step process without involving intermediates and without interruption of plastifying as well as compressing and molding raw polymer into films.

One important feature of the process of the invention is that the raw material does not need to be compounded first, meaning that polymers and additives can be used under any form (powders, granules, flakes, polymer film pieces to recycle, liquids) and not only under the pellet form. Thus, the first step of compounding is not compulsory and one can manufacture film by blown-extrusion from raw polymer and additives as such in a single step process.

Since the previous step of compounded is omitted, the process of the invention reduces the shear stress, fragmentation and molecular weight loss of polymers. As a result, the preparation process is considerably facilitated because the reaction extruder and the film preparation form a process unit. Compounding and film preparation occur in one step. The production is more cost-efficient as no packing and transportation of the pellets are required and as less personnel and equipment costs are incurred. In addition, energy for transporting and melting the pellets can be saved.

The polymer used in the process of the invention can be any polymer. The polymer is preferably in granule or powder form and does not need to be compounded first.

In the raw material, the content in polymer is preferably more than 50%, advantageously from 51 % to 70 %, expressed in weight based on the total weight of the raw material.

In a preferred embodiment of the invention, the polymer is partially or completely bio-based polymer. The term "bio-based," as used in this description, indicates the inclusion of some component that derives from at least one material derived from renewable biological resources.

The polymer is advantageously selected from the group consisting of polyolefins, polyesters, starches, celluloses, polyamides, polyesteramides, as well as their copolymers and mixtures thereof.

In an advantageous embodiment, the polymer is a polyolefin. The polyolefin is advantageously polyethylene or polypropylene, in particular low-density polyethylene, linear low-density polyethylene, high-density polyethylene, ultra-high-molecular-weight polyethylene, cross-linked polyethylene, high density cross-linked polyethylene, medium density polyethylene, very low density polyethylene, and polyprolpylene isotactic, as well as their copolymers and mixtures thereof. Biopolyethylene (or also known as renewable polyethylene) is made out of ethanol, which becomes ethylene after a dehydration process. It can be made from various feedstocks including sugar cane, sugar beet and wheat grain. One can for instance use the green polyethylene developed by Braskem.

In a preferred embodiment of the invention, the polymer is biodegradable.

In an advantageous embodiment, the polymer, advantageously biodegradable polymer, is selected from the group consisting of an aliphatic polyester such as polycaprolactone (PCL), polybutylene succinate (PBS), polyhydroxyalkanoate (PHA), polyhydroxybutyrate (PHB), polyhydroxyvalerate (PHV), poly(lactic acid) (PLA), an aliphatic copolyester such as polybutylene succinate/adipate (PBSa), polyhydroxybutyrate-co-hexanoate (PHBH), polyhydroxybutyrate-co-hydroxyvalerate (PHBV), an aliphatic-aromatic copolyester such as poly(butylene adipate-co-terephthalate) (PBAT), starch, modified starch, Thermoplastic Starch (TPS) and mixtures thereof.

In a preferred embodiment, the polymer is starch, modified starch or Thermoplastic Starch alone or in mixture with one or more biodegradable polymer. The process can in particular be implemented with a polymer which is:
- a mixture of an aliphatic-aromatic copolyester such as poly(butylene adipate-co-terephthalate) (PBAT), starch and poly(lactic acid) (PLA);
- a mixture of an aliphatic-aromatic copolyester such as poly(butylene adipate-co-terephthalate) (PBAT), starch and PHBH.

Additives can also be added. Said additives are preferably selected from the group consisting of mineral or natural fillers (such as calcium carbonate), organic or inorganic fibres, recycled polymers and liquid dies. The additives are preferably under solid or liquid form.

Advantageously, the additive comprises solid fillers and fibres, wherein at least 50% by weight, advantageously at least 70% by weight, more advantageously from 80 to 100% by weight, of said fillers or fibres, compared to the total weight of said fillers or fibres, are free of carrier material.

Within the scope of the present invention the terms "filler" and "fiber" encompasses any material added to plastics to vary their mechanical properties and/or to lower their cost.

Within the scope of the present invention the term "recycled polymer" encompasses any scrap or waste plastics, wet or dried, such as post-consumer polyethylenes, in particular polyethylene terephthalate, high-density polyethylene or low-density polyethylene.

Within the scope of the present invention the term "dies" encompasses any material, in a liquid or solid form, which can be used to colour the film.

As already explained the process of the invention is highly advantageous when the fillers or the fibres are used as such rather than first compounding with a suitable polymer carrier.

In addition, it has been surprisingly discovered that by the process of the invention the mixture of the different components of the raw material (polymer(s) and additive(s)) is improved, meaning that the compatibility between the polymer(s) and the additive(s) is improved. In the films manufactured by the process of the invention, the components are well distributed and/or well dispersed.

In the films manufactured by the process of the invention, the components are well distributed. The distribution describes the repartition of the additive (dispersed phase) within the polymer matrix (continuous phase). In a bad distributed film, the additive is concentrated in a zone of the polymer matrix: in some zones the additive concentration will be extremely high while in the other zones the additive concentration will be extremely low. On the contrary, in a well distributed film, the additive concentration is about the same in the whole polymer matrix.

The process of the invention improves the distribution of the additives within the polymer matrix.

In the films manufactured by the process of the invention, the components are well dispersed. The dispersion describes the average diameter of the additive particle size (dispersed phase) within the polymer matrix (continuous phase). The more the additive is well dispersed, the smaller is its particle size.

The process of the invention improves the dispersion of the additives within the polymer matrix.

Since the mixture of the components (distribution and/or dispersion) is improved, it is possible to increase the content of additives in the film of the invention, in comparison with the maximal content of additives in films manufactured by a conventional blown film line. The properties, in particular appearance and mechanical properties, of a film containing high amounts of filler, for example 30% by weight of calcium carbonate, are improved when said film is manufactured by the process of the invention in comparison with a film manufactured by a conventional two-step process.

The process of the invention is more economic than the conventional processes since the first compounding step can be omitted and one implements a low pressure within the multi-screw extruder.

But the process also leads to films exhibiting improved properties in comparison to the prior art.

First, the process of the invention improves the distribution and/or the dispersion of the additives within the polymer matrix. Thus one notes an improvement of the mixture between the polymer and the additives in the obtained films. The polymer/additives compatibility is improved.

Furthermore, the obtained films show a narrow molecular weight distribution, (in comparison to films manufactured by a traditional single screw process/technology).

The inventors believe that these improved properties result from the reduced shear stress of the polymer chains in the low pressure process of the invention (in particular without first compounding step). Thus damages to the molecular structure of the polymer, such as splitting off of molecule fragments, shortening of polymer chains, reducing of the molecular weight of the polymer, are decreased.

We will now describe in more details the twin screw extruder. The invention is further illustrated below by means of drawings.

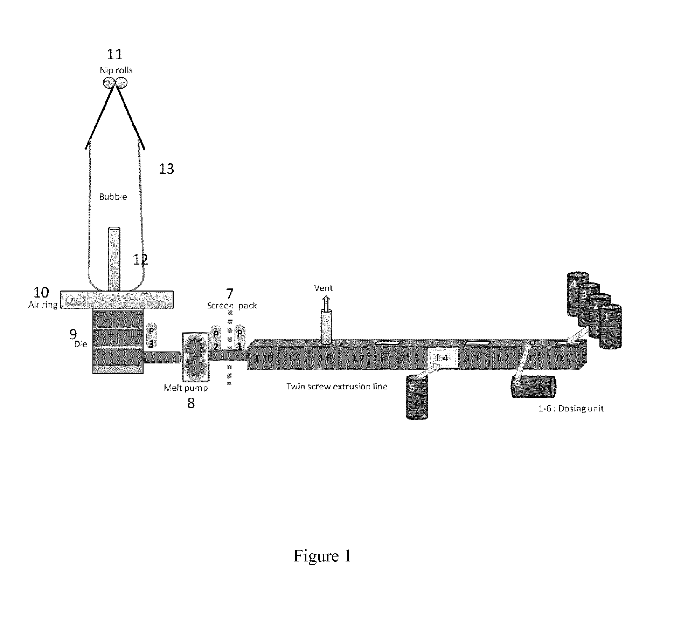

FIG. 1 shows a lateral view of a production line for the production of blown films. Depicted are individual barrel sections 0.1, 1.1 to 1.10 of the multi-screw extruder, a screen pack 7, a melt pump 8 and a circular die 9 connected to an air ring 10. A mixture of polymer and, if desired, additives is measured with a metering device (not shown in FIG. 1) and added via dosing units 1 to 4 of the first barrel section 0.1. The circular die 9 is supplied with the melt by a gear pump 8 provided behind barrel section 1.10; the melt first passed through a screen pack 7 to remove residues. The extrudate is pulled upwards from the die 9 by a pair of nip rolls 11 high above the die 9. Around the die 9 sits an air-ring 10. The air-ring 10 cools the film as it travels upwards. In the centre of the die is an air outlet 12 from which compressed air is forced into the centre of the extruded circular profile, creating a bubble 13.

The invention also relates to the use of a multi-screw extruder, linked, directly or via a pressure device, to a circular film-blowing die for adding liquid or solid additives, which are free of a polymer carrier, to a polymer in the manufacture of a film.

Thus, the use of a multi-screw extruder, linked, directly or via a pressure device, to a circular film-blowing die allows using liquid or solid additives, which are not compounded first. This is highly advantageous on the economical point of view, since raw additives are significantly less expensive that compounded additives (ie additive having a polymer carrier).

The multi-screw extruder, the pressure device, the die, the polymer, the additives and the extrusion process are as disclosed above.

In particular, said additives are preferably selected from the group consisting of mineral or natural fillers (such as calcium carbonate), organic or inorganic fibres and liquid dies. The size of said additives is advantageously greater than 1 micron.

In particular, the pressure device is a pump, more specifically a gear pump.

The following examples are not limitative.

### Examples:

### Example 1: LLDPE

The extruder described in figure 1 is fed with 89.0% LLDPE (grade 1.0 g/10'; d=0.920), 10% CaCO₃ in powder and 0.5% Masterbatch.

The following temperature profile is applied:

| | |
|---|---|
| Barrel 1.1 | 190°C |
| Barrel 1.2 | 220°C |
| Barrel 1.3 | 225°C |
| Barrel 1.4 | 200°C |
| Barrel 1.5 | 195°C |
| Barrel 1.6 | 195°C |
| Barrel 1.7 | 195°C |
| Barrel 1.8 | 190°C |
| Barrel 1.9 | 195°C |
| Barrel 1.10 | 195°C |
| Die | 210°C |

The speed of the twin-screw is 260 min⁻¹.

The pressure is:

| | |
|---|---|
| P1 (bar) | 59 |
| P2 (bar) | 20 |

Comparison of the low pressure blown film line with a traditional blown film line:

**Table 1**

| | Low pressure blown film line | Traditional blown film line |
|---|---|---|
| P3 (bar) | 253 | +200 % |
| SME (kwh/kg) | 0.225 | +300 % |
| Tensile strength MD (N/mm²) | 33.1 | [-10%; -20%] |
| Elongation MD (%) | 697 | [-10%; -20%] |
| Tensile strength TD (N/mm²) | 26.2 | [-10%; -20%] |
| Elongation TD (%) | 836 | [-10%; -20%] |
| Dart drop test (2) (g/µm) | 4.5 | [-20%; -40%] |

| | | |
|---|---|---|
| SME = Specific mechanical energy consumption | | |

Thus, the process of the invention implements a pressure which has been significantly reduced (by 200%) with the consequence that the SME of the process is also significantly reduced (by 300%).

In addition, the mechanical properties of the film obtained by the process of the invention are improved.

### Example 2 : Biomaterial

The extruder described in figure 1 is fed with 89.0% Bioplast GF106/02, 10% CaCO₃ in powder and 1% Masterbatch.

The following temperature profile is applied:

| | |
|---|---|
| Barrel 1.1 | 140°C |
| Barrel 1.2 | 145°C |
| Barrel 1.3 | 145°C |
| Barrel 1.4 | 145°C |
| Barrel 1.5 | 145°C |
| Barrel 1.6 | 140°C |
| Barrel 1.7 | 140°C |
| Barrel 1.8 | 145°C |
| Barrel 1.9 | 150°C |
| Barrel 1.10 | 150°C |
| Die | 150°C |

The speed of the twin-screw is 221.3 min⁻¹.

The pressure is :

| | |
|---|---|
| P1. (bar) | 36 |
| P2 (bar) | 25 |

Comparison of the low pressure blown film line with a traditional blown film line:

**Table 2**

| | Low pressure blown film line | Traditional blown film line |
|---|---|---|
| P3 (bar) | 163 | +200 % |
| SME (kwh/kg) | 0.200 | +300 % |
| Tensile strength MD (N/mm²) | 25.2 | [-5%; -10%] |
| Elongation MD (%) | 632 | [-5%; -10%] |
| Tensile strength TD (N/mm²) | 21.6 | [-5%; -10%] |
| Elongation TD (%) | 700 | [-5%; -10%] |
| Dart drop test (2) (g/µm) | 10.3 | [-10%; -20%] |

Thus, the process of the invention implements a pressure which has been significantly reduced (by 200%) with the consequence that the SME of the process is also significantly reduced (by 300%).

In addition, the mechanical properties of the film obtained by the process of the invention are improved.

### Example 3: Aliphatic-aromatic copolyester biodegradable

The extruder described in figure 1 is fed with 70.0% aliphatic-aromatic copolyester biodegradable, and 30% CaCO₃ in powder.

The following temperature profile is applied:

| | |
|---|---|
| Barrel 1.1 | 120°C |
| Barrel 1.2 | 145°C |
| Barrel 1.3 | 145°C |
| Barrel 1.4 | 145°C |
| Barrel 1.5 | 145°C |
| Barrel 1.6 | 145°C |
| Barrel 1.7 | 145°C |
| Barrel 1.8 | 145°C |
| Barrel 1.9 | 145°C |
| Barrel 1.10 | 145°C |
| Die | 145°C |

The speed of the twin-screw is 250 min⁻¹.

The pressure is:

| | |
|---|---|
| P 1 (bar) | 40 |
| P2 (bar) | 25 |

Comparison of the low pressure blown film line with a traditional blown film line:

**Table 3**

| | Low pressure blown film line | Traditional blown film line |
|---|---|---|
| P3 (bar) | 173 | +200 % |
| SME (kwh/kg) | 0.204 | +300 % |
| Tensile strength MD (N/mm²) | 30.7 | [-10%; -20%] |
| Elongation MD (%) | 524 | [-10%; -20%] |
| Tensile strength TD (N/mm²) | 30.7 | [-10%; -20%] |
| Elongation TD (%) | 602 | [-10%; -20%] |
| Dart drop test (2) (g/µm) | 10.1 | [-20%; -40%] |

Thus, the process of the invention implements a pressure which has been significantly reduced (by 200%) with the consequence that the SME of the process is also significantly reduced (by 300%).

In addition, the mechanical properties of the film obtained by the process of the invention are improved.

By the conventional process, it is not possible to obtain a film with commercially valuable properties containing 30% by weight of CaCO₃.

## Claims

1. A low-pressure process for preparing a polymer film by extrusion-blowing, **characterized in that** it comprises the following successive steps:
a- feeding a multi-screw extruder, in a first barrel section, with the raw material consisting of polymer and additive, said raw material does not need to be compounded first and the additive comprises solid fillers or fibers, wherein at least 50% by weight of said solid fillers or fibers, compared to the total weight of solid fillers or fibers, are free of polymeric carrier material; then
b- passing the raw material from the first barrel section to the last barrel section to form an extrudate, wherein the pressure measured at the exit of the last barrel section does not exceed 150 bar, then
c- passing the extrudate in a circular die to blow the film,
and wherein the multi-screw extruder comprises the four following zones:
- adding and mixing of the raw material
- Reacting the resulting mixture
- Degasing
- Compressing the melt

2. The process of claim 1, wherein the multi-screw extruder is a twin screw extruder.

3. The process of claim 1 or 2, wherein the pressure, at the exit of the last barrel section of the multi-screw extruder, does not exceed 120 bar, advantageously the pressure is between 10 and 60 bar.

4. The process of anyone of the preceding claims, wherein the filling level in the extruder is less than 80% of the total filling level capacity of the extruder.

5. The process of anyone of the preceding claims, wherein step c- comprises the following successive steps:
c-0. optionnaly, passing the extrudate, exiting the last barrel section of the multi-screw extruder, through a filtering device,
c-1. passing the extrudate, exiting the last barrel section of the multi-screw extruder or exiting the filtering device, in a pressure device, then
c-2- passing the extrudate, exiting the pressure device, in a circular die to blow the film.

6. The process of claim 5, wherein the pressure, at the exit of the pressure device, is above 150 bars, advantageously between 150 and 400 bars.

7. The process of claim 5 or 6, wherein the pressure device is a pump or an extruder, advantageously a pump, more advantageously a gear pump.

8. The process of anyone of the preceding claims, wherein the raw material is fed through one or more feeders, at least one feeder being connected to the first barrel section of the multi-screw extruder.

9. The process of anyone of the preceding claims, wherein the polymer is partially or completely bio-based polymer.

10. The process of anyone of the preceding claims, wherein the polymer is selected from the group consisting of polyolefins, polyesters, starches, celluloses, polyamides, polyesteramides, as well as their copolymers and mixtures thereof.

11. The process of claim 10, wherein the polymer is selected from:
- a polyolefin, advantageously polyethylene or polypropylene, or
- the group consisting of an aliphatic polyester such as polycaprolactone (PCL), polybutylene succinate (PBS), polyhydroxyalkanoate (PHA), polyhydroxybutyrate (PHB), polyhydroxyvalerate (PHV), poly(lactic acid) (PLA), an aliphatic copolyester such as polybutylene succinate/adipate (PBSa), polyhydroxybutyrate-co-hexanoate (PHBH), polyhydroxybutyrate-co-hydroxyvalerate (PHBV), an aliphatic-aromatic copolyester such as poly(butylene adipate-co-terephthalate) (PBAT), starch, modified starch, Thermoplastic Starch (TPS), and mixtures thereof, in particular a mixture of an aliphatic-aromatic copolyester such as poly(butylene adipate-co-terephthalate) (PBAT), starch and poly(lactic acid) (PLA) or a mixture of an aliphatic-aromatic copolyester such as poly(butylene adipate-co-terephthalate) (PBAT), starch and PHBH.

12. The process of anyone of the preceding claims, wherein the polymer is in granule or powder form and is not compounded first.

13. The process of anyone of the preceding claims, wherein, in the raw material, the content in polymer is more than 50%, advantageously from 51 % to 70 %, expressed in weight based on the total weight of the raw material.

14. The process of anyone of the preceding claims, wherein the raw material contains additives, which are selected from the group consisting of mineral or natural fillers, organic or inorganic fibres, recycled polymers and liquid dyes, advantageously said fillers or the fibres are not compounded first.

15. Use of a multi-screw extruder, linked, directly or via a pressure device, to a circular film-blowing die for adding liquid or solid additives, which are free of a polymer carrier, to a polymer.
